# EUROPEAN PATENT SPECIFICATION

(11) **EP 0 346 109 B1**
(45) Date of publication and mention of the grant of the patent: **21.05.1997**
(21) Application number: 89305777.8
(22) Date of filing: 08.06.1989
(51) Int. Cl.: C02F 3/20, C02F 3/22

(54) **Device for circulation and gas exchange in liquids**
Vorrichtung zur Umwälzung und zum Gasaustausch in Flüssigkeiten
Appareil pour la circulation et l'échange de gaz dans des liquides

(30) Priority: 08.06.1988 GB 8813468
(43) Date of publication of application: 13.12.1989
(73) Proprietor: Campbell, Elisabeth Mary, Riccall York YO4 6QE (GB)
(72) Inventor: Campbell, Keir Charles, Riccall York Y04 6QE (GB)
(74) Representative: Belcher, Simon James

(56) References cited:
- EP-A- 0 174 429
- CH-A- 479 492
- DE-A- 3 700 038
- DE-B- 1 194 337
- FR-A- 2 300 608
- GB-A- 1 459 413
- GB-A- 1 531 015
- US-A- 1 681 890
- US-A- 3 424 443
- US-A- 3 872 003

## Description

This invention relates to the aeration and circulation of liquids for example to introduce oxygen into water and circulate such water within a body of liquid such as a tank, impoundment or lake. This is important in the treatment of industrial and domestic affluent and for use in a body of water to promote the growth of aquatic animals and prevent their mortality.

It is known to introduce gas bubbles into a body of liquid at some intermediate depth below the liquid surface by means of an air compressor. This results in gas diffusion from the bubbles to the liquid. It is known to make use of what is known as the airlift principle whereby the action of the rising gas bubbles creates a circulatory flow of liquid within the body of liquid itself. Such circulatory flows of liquid have the effect of dispersing dissolved gases within the body of liquid and keeping suspended solids in suspension in the liquid which would otherwise settle at the bottom of the body of liquid. In the treatment of industrial and domestic effluent such actions allow oxygen to be supplied to the micro-organisms involved in the purification process and also enables suspended solids in the liquid to be kept in suspension since if such suspended solids are not in suspension the purification process can be detrimentally affected.

Aeration apparatus of the kind to which the invention relates is disclosed in GB-1459413 and GB-1531015. The apparatus comprises a riser tube with air diffuser pipes provided it its bore. The diffuser pipes have nozzles, perforations or slits in them that are arranged in a horizontal plane at right angles to the axis of the riser tube. The nozzles can have a size of from 2 to 8 mm diameter.

The object of the invention is to improve the efficiency of known apparatus for the aeration and circulation of liquids and some aspects of the invention alleviate the problem of the apparatus becoming less efficient due to extraneous matter in the liquid or gas supplied to the device.

The present invention provides a gas injection or aeration device for immersion in a liquid, which comprises:
(a) a diffuser comprising at least one tube having a plurality of nozzles formed in it in a plurality of rows extending along the top of the tube, for the production of a large quantity of small bubbles in a stream of a gas supplied to the diffuser under pressure to form a gas-liquid mixture in the liquid, the area of each nozzle being not more than 3.0 mm²;
(b) a riser tube which extends generally upwardly from the diffuser, and within which the majority of gas bubbles rise through the liquid; and
(c) an undertube extending below the diffuser to entrain liquid to rise towards the diffuser.

Structure at or around the level of the diffuser pipe(s) at least partially encompasses an area of liquid at or around that level in which no part of the liquid is further than 30 cm or preferably not more than 15 cm from a diffuser pipe.

Preferably, there is not more than 30 cm or preferably not more than 15 cm horizontally from the tube wall to the nearest of more than one pipe, with the pipes being not more than 60 cm apart.

The diffuser pipe(s) in the above mentioned structure may contain holes, slits, slots or other orifices for the production of bubbles which remain open when the device is not in use and no gas is passing through such orifices. Such orifices are to have an open area of less than 3.0 mm² each.

Preferably, each diffuser tube will have a plurality of slots or holes along its length of the tube and the tube will have a resilient sleeve extending along its slotted or apertured length and sealed on said tube at its opposite ends, said sleeve having a plurality of slots or holes in the latter, the arrangement being such that when gas is pumped into the diffuser pipes the resilient sleeves are caused to expand so that bubbles of gas can emerge through the plurality of slits in said sleeves and when the supply of gas to said pipes is cut off the sleeves shrink back onto their respective pipes to close said slits.

The diffuser pipes may be made of cylindrical tube but may be of other cross sectional shape for increasing the velocity of the flow of water past the orifices or of enhancing the shearing effect on the bubbles as they emerge from the orifices although this effect may be achieved by using a combination of a tube and either flat or curved plates positioned either above or below the tube or both above and below the tube. The arrangement is such that when air pressure is applied the flexible nature of the diffuser will allow the orifices to open and for air to pass from the diffuser into the liquid in which the device is submerged. An additional advantage is that the orifices can be made to vibrate and such vibration can reduce the size of bubbles produced and prevent the precipitation of chemicals or growth of micro-organisms around the orifices which otherwise might tend to block them. The action of the orifices closing when the supply of air is cut off can also act as a clearing mechanism to remove extraneous matter which has accumulated in and around the orifices. Such diffusers may be positioned within a riser tube.

An appropriate arrangement for the orifices in the diffuser pipe(s) for them to be provided in porous media containing hole sizes of around 150 µm in diameter.

The arrangement may be such that the efficiency of the device may not be unduly affected by the presence of extraneous matter in the liquid. This may be brought about by the blanked off ends of the diffuser pipes being spaced from the wall of the riser tube to leave a gap, angled plate elements being positioned beneath the respective diffuser pipes so that any extraneous matter in the liquid, for example weeds, rags and the like, will tend to be displaced laterally to pass through the gap. In this case, the gap may normally be kept shut by a spring loaded flap or flexible flap device arranged to open under the force of extraneous matter circulating in the liquid. Alternatively, so that the efficiency will not be unduly affected by the presence of extraneous matter in the liquid, the diffuser pipes may be articulated or may be sufficiently flexible so that they can be displaced or bend upwards so that extraneous matter will tend to slide free along the length of the diffuser.

The diffuser of the device may be arranged so that one or a number of holes, slits, slots or the like are formed along the length of the diffuser with a plate or plates which are flexible, hinged, weighted, tensioned as a spring or the like forming one side of the orifice or orifices. The plate forming one side of the orifice or orifices may be flexible, hinged, weighted, tensioned as a spring or the like or exist in combination of these characteristics and will cause the orifice or orifices to remain closed when the device is not in use as a result of the springing or weight inherent in such a plate but will allow the orifice or orifices to open when air is introduced into the device. Limit stops may be included to control the extent to which said plate can open.

The arrangement may be that the holes, slits, slots or the like in the diffuser are corrugated in nature being curved, notched or serrated or the like and either in single or multiple form. The effect of such orifices is to encourage the production of smaller bubbles which are generally produced in streams emanating from the top of such orifices which is to say that part of the orifice which is nearest the surface of the liquid in which the device is submerged. Such corrugated orifices be they curved, notched, serrated or the like may be spaced in lines running horizontally along thee length of the diffuser.

The back or front of the holes, slits, slots or the like in the diffuser tube from which gas is supplied from the device into the liquid in which the device is submerged may be in whole or part tapered; if part tapered the sides of the orifice or orifices may be tapered in a corrugated, notched or serrated form or the like. Such tapering facilitates the breakaway of bubbles as they emerge from the orifices in which the device is submerged and such tapering can be formed on both the front and the back of the orifices in the diffuser tube.

A further arrangement for the diffuser may be such that projections which fit within the orifice or orifices in the diffuser are used in such a way so that such projections can be used to close the orifice or orifices in the diffuser when the device is not in use or can be used to clear the orifice or orifices in the diffuser of extraneous matter when the device is in use. This, for example, may be achieved by using a resilient flexible diffuser sleeve with orifices consisting of round holes which when no gas pressure is applied to the device will shrink onto a number of round projections which fit into and close the round orifices in the diffuser to a greater or lesser extent with such projections being located on a suitable backplate.

The diffuser pipe or pipes excluding any baffle or extraneous fitting which may be attached to such diffuser pipe(s) may be less than 30 cm in breadth as measured at a point which is substantially at right angles to the flow of liquid past such diffuser pipe(s).

When diffuser pipes are used with no riser tube located above such pipes and when more than one diffuser pipe is used then the flow of gas and water created by the additional diffuser pipes can act as a replacement for a solid riser tube located above such diffuser pipes. For instance the efficiency of the transfer of gas into liquid of the device with no riser tube may be doubled if five diffuser pipes are used as compared to the use of a single diffuser pipe.

The device may include a baffle which can be located above the diffuser pipes which may consist of vertical as well as sloping, curved and horizontal structures. The object of such a structure is to create one or a number of open ended chambers which are in part constricted in order to enhance the turbulence of the gas and liquid mixture above the diffusers and thus to create a more efficient transfer of gas into the liquid in which the device is submerged. By use of a baffle, the bubbles can be made to remain in the liquid for an increased period of time and efficiency can be increased. It is thought that for the efficient operation of this modified arrangement, the cross sectional area of the gap between the riser tube and a baffle plate should be at least 0.05 cm² for every 1 cm length of diffuser tube.

The arrangement may be such that baffles are constructed with no vertical plates but consist solely of sloping, curved or horizontal structure. Baffles may be used which cause the gas and liquid stream in the device to flow downwards and thus to extend the contact time the gas remains in the liquid. Baffle plates above or near the diffuser pipe(s) may be spiral in nature.

The arrangement may be that the cross-sectional shape of the diffuser pipe(s) may not be circular and may be wider at one point of the cross section than another. The diffuser pipe(s) may be positioned so that the difference in width of the cross-section of the diffuser pipe(s) creates gaps between the pipes or a pipe and the riser tube wall which vary in size. The cross-sectional shape of the diffuser pipe(s) may be of a nature to create one or more gaps between the pipes or a pipe and the riser tube wall which are wider than other gaps both above and below such (wider) gaps. The diffuser pipe(s) may have a cross-section which is flat on one or both sides.

In order that the invention may be fully understood and readily carried into effect, the same will be described, by way of example only, with reference to the accompanying drawings, of which:

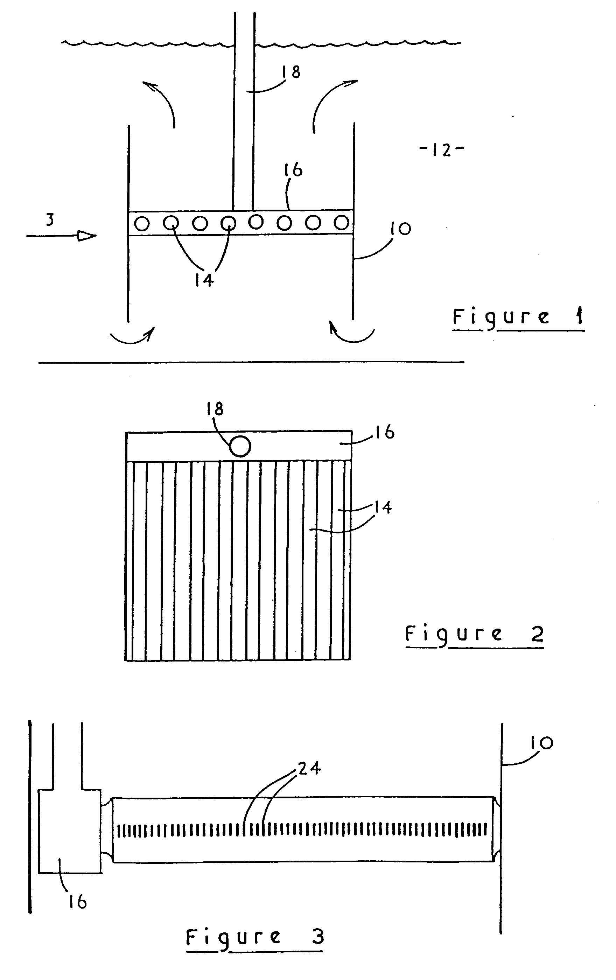

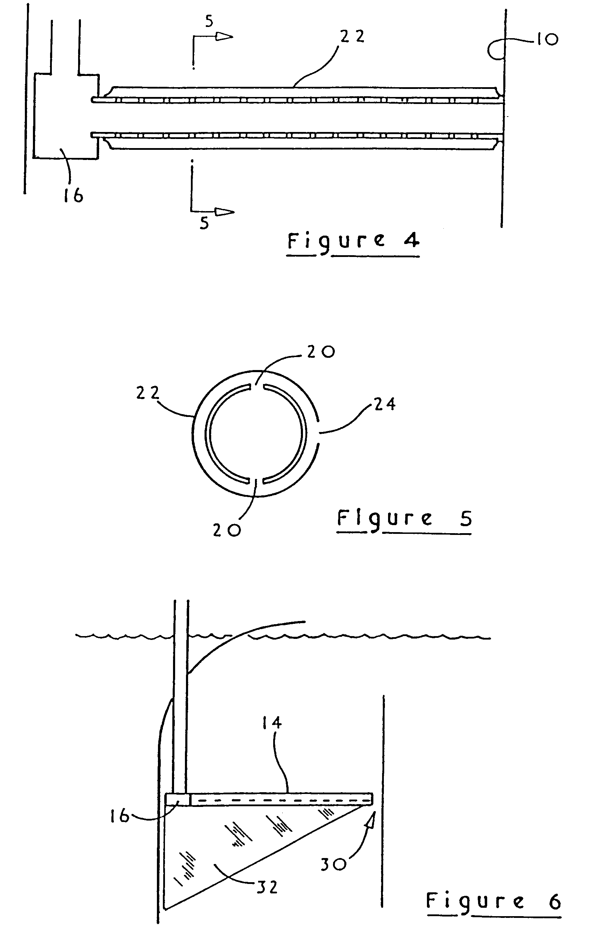

Figure 1 is a side view of part of a tank containing aeration apparatus embodying the invention; Figure 2 is a plan view thereof; Figure 3 is a view looking at the direction of arrow 3 in Figure 1 and drawn to a larger scale than the latter; Figure 4 is a view similar to Figure 3 but drawn partly in section; Figure 5 is a somewhat diagrammatic sectional view on the line 5-5 in Figure 4 but drawn to a somewhat larger scale than Figure 4; Figure 6 is a side view of another construction of aeration device.

Referring now to Figures 1 and 2 of the drawings, the apparatus there illustrated for the aeration of liquid includes a riser tube 10 located or formed within a tank 12 for the liquid. As drawn the tube 10 is a separate tube located within the tank but it will be understood that it could equally well have been formed in part by a wall portion of the tank. The apparatus also includes a plurality of diffuser pipes 14 extending across the riser tube from a common manifold 16 to which an oxygenating gas, for example air, can be fed through a supply pipe 18 from a source not shown.

In Figures 3 to 5 there is illustrated the construction of the diffuser pipes 14. As shown, each pipe extends in cantilever fashion from the manifold 16 and is blanked off at its end remote from the manifold by a all of the tube 10. Each diffuser pipe has a plurality of slots 20 extending along its length both on its top side and on its underside. A resilient sleeve 22 extends along its slotted length and is sealed on the tube at its opposite ends. The sleeve has a plurality of slits 24 spaced apart longitudinally of said sleeve but at a different location around the tube than the slots of the latter. As shown in Figure 5, the plurality of slits 24 open sideways from the sleeve, in this instance on one side only of thee latter. The arrangement is such that when gas is pumped into the diffuser pipes the resilient sleeves are caused to expand so that bubbles of gas can emerge through the plurality of slits in the sleeves. When the supply of gas to said pipes is cut off, the sleeves shrink back onto their respective pipes to close said slits. One advantage of this construction is that the slits in the sleeve tend to remain clean and free from debris when the apparatus is not in use for any period of time.

In the drawings it will be seen that the slits, slots or the like through which the bubbles emerge into the water open sideways from the diffuser pipes, that is to say at 90° to the induced upward flow of water. This brings about a shear effect which reduces the size of the bubbles produced. There is a gradual falling off in efficiency if this angle is less than 90°. For this reason the angle will probably never be less than 45° as measured from the cross sectional centre of the diffuser pipes.

Figure 6 shows apparatus basically similar to that described with reference to Figures 1 to 5 but specially adapted so that its efficiency will not be unduly affected by the presence of extraneous matter in the liquid. If such extraneous matter is of a relatively large size then the riser tube can become at least partially blocked. If such extraneous matter is of a relatively small size or chemical in nature then it can block the orifices in the diffuser pipes supplying air to the device. For example, calcium salts may precipitate around the orifices and eventually cause them to become blocked. As shown in Figure 6, the blanked off ends of the diffuser pipes 14, that is to say the ends remote from the manifold 16, are spaced from the wall of the riser tube to leave a gap 30. In addition, angled plate elements 32 are positioned beneath the respective diffuser pipes so that any extraneous matter in the liquid, for example, weeds, rags or other loose matter circulating through the aerator device will tend to be displaced laterally to pass through the gap 30. The spaces between the diffuser pipes will thus tend to remain open for the free circulation of liquid between them.

Referring once again to Figures 1 and 2, it will be seen that the diffuser pipes are relatively closely spaced, that is to say being spaced apart at less than 15 cm. In addition, the height of the riser tube above thee diffuser is at least 10% of the minimum submerged depth of the diffuser pipes. The arrangement is such that the construction of the diffuser pipes, and the shear effect of the induced upward flow of liquid between the diffuser pipes, brings about the production of small bubbles from a diffuser of which the orifices can be kept closed when the device is not in use and hence the orifices may be kept free of extraneous matter which would otherwise block such orifices all as a result of the diffuser being flexible. It has been found that when bubbles are produced by this method the efficiency of the apparatus is relatively high, that is to say that the oxygenation of the liquid for a given power consumption is high. It is thought that for the most efficient operation the cross sectional area of the riser tube should be one square centimetre or more for every one centimetre length of the diffuser pipe. The height of the riser tube above the diffuser should preferably be at least 10% of the minimum submerged depth of the diffuser but a section of the riser tube may be reduced in height in order to allow for the efficient discharge of liquid or gas and liquid from the device.

## Claims

1. A gas injection or aeration device for immersion in a liquid, which comprises:
(a) a diffuser comprising at least one tube having a plurality of nozzles formed in it in a plurality of rows extending along the top of the tube, for the production of a large quantity of small bubbles in a stream of a gas supplied to the diffuser under pressure to form a gas-liquid mixture in the liquid, the area of each nozzle being not more than 3.0 mm²;
(b) a riser tube which extends generally upwardly from the diffuser, and within which the majority of gas bubbles rise through the liquid; and
(c) an undertube extending below the diffuser to entrain liquid to rise towards the diffuser.

2. A device as claimed in claim 1, in which the riser tube is defined by substantially imperforate walls.

3. A device as claimed in claim 1 or claim 2, in which the wall of the diffuser tube includes flattened portion extending at least partially along its length with the plurality of nozzles formed in it.

4. A device as claimed in any one of claims 1 to 3, which includes at least one plate positioned relative to the diffuser tube to enhance the shear effect of bubbles as they emerge from the nozzles.

5. A device as claimed in any one of claims 1 to 4, in which the diffuser tube includes resilient material, in which the nozzles are formed as apertures.

6. A device as claimed in claim 5, in which the apertures have a relatively open state when gas is supplied to the diffuser tube and a relatively less open state when gas is not supplied to the tube, the area of the apertures in the open state being not more than 3.2 mm².

7. A device as claimed in any one of claims 1 to 6, which includes a baffle plate in the riser tube to enhance turbulence in liquid flowing in the riser tube.

8. A device as claimed in any one of claims 1 to 7, in which the nozzles are provided as elongate slits, which preferably have a generally corrugated form.

9. A device as claimed in any one of claims 1 to 8, which includes ridges located between adjacent nozzles.

10. A device as claimed in any one of claims 1 to 9, which includes a plate element located below the diffuser, to cause objects in the liquid to be aerated to be displaced from the flow of liquid flowing towards the diffuser.

11. A device as claimed in any one of claims 1 to 10, in which the diffuser tube is mounted to be capable of articulation in an upward direction.

12. A device as claimed in any one of claims 1 to 11, in which the diffuser tube is inclined to the horizontal.

13. A device as claimed in any one of claims 1 to 12, in which the nozzles are arranged to direct air laterally relative to the flow of liquid past them.

14. A device as claimed in any one of claims 1 to 13, which includes means for imparting directional flow to liquid from the device.

15. A device as claimed in claim 14, in which the means for diverting flow comprises a baffle.

16. A device as claimed in claim 15, in which the baffle is so arranged that liquid leaving the device is directed downwardly.

17. A device as claimed in any one of claims 13 to 16, in which the means for diverting flow is provided by the walls of the riser tube, which are open on one side only at its outlet end.

18. A device as claimed in any one of claims 1 to 17, which is incorporated in an aerator intended to float in a quantity of the liquid intended to be aerated.

19. A method of aerating a liquid which involves injecting a gas into the liquid using a device as claimed in any one of claims 1 to 19, the gas comprising air.

## Patentansprüche

1. Gasinjektions- bzw. Belüftungsvorrichtung zum Eintauchen in eine Flüssigkeit, welche umfaßt:
(a) einen Diffusor, der mindestens ein Rohr umfaßt, in dem eine Mehrzahl von Düsen in einer Mehrzahl von entlang der Oberseite des Rohres verlaufenden Reihen ausgebildet sind, und welcher der Produktion einer großen Menge kleiner Blasen in einem Gasstrom, welcher dem Diffusor unter Druck zugeführt wird, dient, derart, daß in der Flüssigkeit eine Gas-Flüssigkeitsmischung gebildet wird, wobei die Fläche von jeder Düse 3,0 mm² nicht übersteigt;
(b) ein Steigrohr, welches allgemein von dem Diffusor nach oben verläuft und innerhalb welchem der Hauptteil der Gasblasen durch die Flüssigkeit aufsteigt; und
(c) ein Unterrohr, welches unterhalb des Diffusors verläuft und die Flüssigkeit so mitführt, daß sie auf den Diffusor zu hochsteigt.

2. Vorrichtung nach Anspruch 1, bei welcher das Steigrohr durch im wesentlichen nicht perforierte Wände begrenzt ist.

3. Vorrichtung nach Anspruch 1 oder 2, bei welcher die Wand des Diffusorrohres einen abgeflachten Abschnitt enthält, welcher zumindest teilweise entlang dessen Längsabmessung vorläuft und in dem die Mehrzahl von Düsen ausgebildet ist.

4. Vorrichtung nach einem dar Ansprüche 1 bis 3, bei welcher mindestens eine Platte gegenüber dem Diffusorrohr so angeordnet ist, daß der Scherungseffekt der Blasen, während diese aus den Düsen austreten, gefördert ist.

5. Vorrichtung nach einem der Ansprüche 1 bis 4, bei welcher das Diffusorrohr elastisches Material enthält, in welchem die Düsen als Öffnungen ausgebildet sind.

6. Vorrichtung nach Anspruch 5, bei welcher die Öffnungen einen relativ offenen Zustand aufweisen, wenn dem Diffusorrohr Gas zugeführt wird, und einen relativ weniger offenen Zustand, wenn dem Rohr kein Gas zugeführt wird, wobei die Fläche der Öffnungen im Offenzustand 3,2 mm² nicht übersteigt.

7. Vorrichtung nach einem der Ansprüche 1 bis 6, weiche eine Drosselplatte in dem Steigrohr enthält, welche in der Flüssigkeit, welche in dem Steigrohr fließt, die Turbulenz erhöht.

8. Vorrichtung nach einem der Ansprüche 1 bis 7, bei welcher die Düsen als längliche Schlitze vorgesehen sind, welche vorzugsweise eine im wesentliche gewellte Form aufweisen.

9. Vorrichtung nach einem der Ansprüche 1 bis 8, welche zwischen benachbarten Düsen angeordnete Rücken enthält.

10. Vorrichtung nach einem der Ansprüche 1 bis 9, welche ein unterhalb des Diffusors angeordnetes Plattenelement enthält, welches in der zu belüftenden Flüssigkeit befindliche Gegenstände aus der Flüssigkeitsströmung, die zum Diffusor fließt, wegleitet.

11. Vorrichtung nach einem der Ansprüche 1 bis 10, bei welcher das Diffusorrohr so montiert ist, daß es sich in Richtung nach oben gelenkig bewogen läßt.

12. Vorrichtung nach einem der Ansprüche 1 bis 11, bei welcher das Diffusorrohr gegenüber der Horizontalen geneigt ist.

13. Vorrichtung nach einem der Ansprüche 1 bis 12, bei welcher die Düsen so angeordnet und eingerichtet sind, daß sie die Luft, bezogen auf die an ihnen vorbeiführende Strömung der Flüssigkeit, seitlich lenken.

14. Vorrichtung nach einem der Ansprüche 1 bis 13, welche eine Einrichtung enthält, welche der aus der Vorrichtung kommenden Flüssigkeit eine gerichtete Strömung verleiht.

15. Vorrichtung nach Anspruch 14, bei welcher die Strömungs-Ablenkeinrichtung eine Drosselplatte umfaßt.

16. Vorrichtung nach Anspruch 15, bei welcher die Drosselplatte so angeordnet ist, daß die die Vorrichtung verlassende Flüssigkeit nach unten gerichtet wird.

17. Vorrichtung nach einem der Ansprüche 13 bis 16, bei welcher die Strömungs-Ablenkeinrichtung durch die Wände den Steigrohres gebildet ist, die nur an dessen Auslaßende auf einer Seite offen sind.

18. Vorrichtung nach einem dar Ansprüche 1 bis 17, welche in einen Belüftungseinrichtung eingebaut ist, die in einer Menge der zu belüfteten Flüssigkeit zu schweben bestimmt ist.

19. Verfahren zur Belüftung einer Flüssigkeit, bei welchem unter Verwendung einer Vorrichtung nach einem der Ansprüche 1 bis 18 Gas in die Flüssigkeit injiziert wird, wobei das Gas Luft umfaßt.

## Revendications

1. Dispositif d'injection de gaz ou d'aération destiné à être immergé dans un liquide, qui comprend :
(a) un diffuseur comprenant au moins un tube ayant une pluralité de buses formées en lui en une pluralité de rangées s'étendant le long du haut du tube, pour la production d'une grande quantité de petites bulles dans un courant d'un gaz délivré au diffuseur sous pression pour former un mélange gaz-liquide dans le liquide, la surface de chaque buse n'étant pas supérieure à 3,0 mm² ;
(b) un tube montant qui s'étend globalement vers le haut depuis le diffuseur, et dans lequel la majorité des bulles de gaz montent à travers le liquide ; et
(c) un tube sous-jacent s'étendant sous le diffuseur pour entraîner le liquide afin qu'il monte en direction du diffuseur.

2. Dispositif selon la revendication 1, dans lequel le tube montant est défini par des parois sensiblement imperforées.

3. Dispositif selon la revendication 1 ou 2, dans lequel la paroi du tube diffuseur comprend une partie aplatie s'étendant au mois partiellement le long de sa longueur avec la pluralité de buses formés en elle.

4. Dispositif selon l'une quelconque des revendications 1 à 3, qui comprend au moins une plaque positionnée par rapport au tube diffuseur pour augmenter l'effet de cisaillement des billes lorsqu'elles émergent des buses.

5. Dispositif selon l'une quelconque des revendications 1 à 4, dans lequel le tube diffuseur comprend un matériau résilient, dans lequel les buses sont formées sous la forme d'ouvertures.

6. Dispositif selon la revendication 5, dans lequel les ouvertures ont un état relativement ouvert lorsque du gaz est envoyé au tube diffuseur et une état relativement moins ouvert lorsqu'aucun gaz n'est envoyé au diffuseur, la surface des ouvertures dans l'état ouvert n'étant pas supérieure à 3,2 mm².

7. Dispositif selon l'une quelconque des revendications 1 à 6, qui comprend une plaque déflectrice dans le tube montant pour augmenter la turbulence dans le liquide s'écoulant dans le tube montant.

8. Dispositif selon l'une quelconque des revendications 1 à 7, dans lequel les buses sont réalisées sous la forme de fentes allongées, qui ont de préférence une forme globalement ondulée.

9. Dispositif selon l'une quelconque des revendications 1 à 8, qui comprend des cannelures situées entre des buses adjacentes.

10. Dispositif selon l'une quelconque des revendications 1 à 9, qui comprend un élément formant plaque situé sous le diffuseur, pour conduire des objets présents dans le liquide à être aérés pour être enlevés du courant de liquide s'écoulant en direction du diffuseur.

11. Dispositif selon l'une quelconque des revendications 1 à 10, dans lequel le tube diffuseur est monté pour être capable d'une articulation dans une direction vers le haut.

12. Dispositif selon l'une quelconque des revendications 1 à 11, dans lequel le tube diffuseur est incliné par rapport à l'horizontale.

13. Dispositif selon l'une quelconque des revendications 1 à 12, dans lequel les buses sont agencées pour envoyer de l'air latéralement par rapport au courant dans le liquide au-delà d'elles.

14. Dispositif selon l'une quelconque des revendications 1 à 13, qui comprend des moyens pour conférer un écoulement directionnel au liquide provenant du dispositif.

15. Dispositif selon la revendication 14, dans lequel les moyens de déviation du courant comprennent un déflecteur.

16. Dispositif selon la revendication 15, dans lequel le déflecteur est agencé en sorte que le liquide quittant le dispositif est envoyé vers le bas.

17. Dispositif selon l'une quelconque des revendications 13 à 16, dans lequel les moyens de déviation du courant sont fournis par les parois du tube montant, qui sont ouvertes d'un côté seulement à son extrémité de sortie.

18. Dispositif selon l'une quelconque des revendications 1 à 17, qui est intégré à un aérateur destiné à flotter dans une quantité du liquide destiné à être aéré.

19. Procédé d'aération d'un liquide qui comprend le fait d'injecter un gaz dans le liquide à l'aide d'un dispositif selon l'une quelconque des revendications 1 à 19, le gaz comprenant de l'air.
